# EUROPÄISCHE PATENTSCHRIFT

(11) **EP 3 635 303 B1**
(45) Veröffentlichungstag und Bekanntmachung des Hinweises auf die Patenterteilung: **05.05.2021**
(21) Anmeldenummer: 18735724.9
(22) Anmeldetag: 06.06.2018
(51) Int. Cl.: F24V 99/00, F24H 1/40

(54) **HEIZANLAGE**
HEATING SYSTEM
INSTALLATION DE CHAUFFAGE

(30) Priorität: 07.06.2017 IT 201700061902
(43) Veröffentlichungstag der Anmeldung: 15.04.2020
(73) Patentinhaber: Biologik-Systems Srls, 39100 Bolzano (BZ) (IT)
(72) Erfinder: DIANA, Tobias, I-39057 Appiano sulla Strada del Vino (BZ) (IT)
(86) Internationale Anmeldenummer: PCT/IT2018/000081
(87) Internationale Veröffentlichungsnummer: WO 2018/225104

(56) Entgegenhaltungen:
- AT-B- 380 951
- CH-A5- 673 075
- DE-A1- 2 751 820
- DE-A1- 3 151 862
- DE-A1- 3 542 011
- DE-A1-102011 111 430
- US-A- 4 198 211
- US-A- 5 144 940

## Beschreibung

### Technisches Gebiet

Die Erfindung betrifft eine Heizanlage gemäß dem Oberbegriff des Patentanspruches 1.

Um eine Flüssigkeit, insbesondere eine Flüssigkeit wie das Wasser, zu erwärmen, benutzt eine solche Heizanlage die Wärme, die von dem sich zersetzenden Material eines Kompostierungshaufens naturgemäß erzeugt wird. Es ist nämlich bekannt, dass ein Kompostierungshaufen naturgemäß Wärme erzeugt, dadurch dass sein Material sich aufgrund eines von spezifischen Mikroorganismen verursachten aeroben Abbauprozess zersetzt. Um Wasser durch Ausnutzung dieser Wärme zu erwärmen, kann man daher (Jean Pain Verfahren) derart einen Schlauchabschnitt innerhalb des Kompostierungshaufens anordnen, dass er direkt mit dem sich zersetzenden Material davon in Berührung steht. Die sich in dem Kompostierungshaufen befindliche Wärme erwärmt den Schlauchabschnitt und dieser erwärmt das in ihm fließende Wasser, sodass das in den Schlauchabschnitt einfließende Wasser eine gewisse Temperatur aufweist und das aus dem Schlauchabschnitt ausfließende Wasser eine höhere Temperatur aufweist, als diejenige beim Einfließen. Um die Aufenthaltszeit des Wassers in dem Kompostierungshaufen zu verlängern und damit die Temperatur zu erhöhen auf die das Wasser erwärmt wird, wird dieser Schlauchabschnitt so viele Male wie möglich zusammengerollt in dem Kompostierungshaufen angeordnet.

### Stand der Technik

Das zuvor erläuterte Jean Pain Verfahren ist ein primitives Gelegenheitsverfahren und die daraus erzielbaren Ergebnisse sind oft ungewiss und unvorhersehbar. Um es daher in einer besser organisierten und vorhersehbaren Weise benutzten zu dürfen, wurden Heizanlagen entwickelt, die, abhängig von der Wassermenge und der Erwärmungstemperatur die man haben möchte, industriell hergestellt und bemessen werden können.

Aus dem Dokument WO2016/061701 A1 ist eine Heizanlage bekannt, die es ermöglicht das Wasser, unter Anwendung der Grundsätze des Jean Pain Verfahrens, zu erwärmen und umfasst zusätzlich, gegenüber der zuvor erläuterten traditionellen Lösung bei der nur Rohre vorgesehen sind, eine Vielzahl von Hohlkörpern. Diese Hohlkörper sind innerhalb des Kompostierungshaufens angeordnet, stehen direkt mit dem sich zersetzenden Material davon in Berührung und werden von der Flüssigkeit durchflossen, die erwärmt werden soll. Sie ermöglichen es sowohl die Größe der Gesamtberührungsfläche (sie besteht aus der äußeren Gesamtfläche der Rohre und der Hohlkörper), mittels welcher die Wärmeübertragung von dem Kompostierungshaufen zu dem Wasser das erwärmt werden soll erfolgt, als auch die Menge des Wassers, das erwärmt wird, im Vergleich zu der o.g. traditionellen Lösung zu erhöhen. Es ist daher möglich, im Vergleich zu der o.g. traditionellen Lösung, eine größere Wassermenge auf eine höhere Temperatur zu erwärmen.

Bei dieser bekannten Heizanlage wird das erwärmte Wasser direkt an einen Abnehmer, im vorliegenden Fall ein Schwimmbecken, also ein offenes Becken, zugeführt, in dem das Wasser einer ständigen Kühlungsaktion ausgesetzt ist, die von dem Raum in dem das Schwimmbecken angeordnet ist oder, wenn sich das Schwimmbecken im Freien befindet, sogar von den Witterungseinflüssen ausgeübt wird. Um diese Kühlungsaktion zu bekämpfen, ist eine Rohrleitung vorgesehen, die das Wasser von dem Schwimmbecken zu der Heizanlage führt, um es dort nochmals zu erwärmen. Während des Betriebes wird dieser Kreislauf ständig wiederholt Die eigentliche Heizanlage, zu der das Schwimmbecken offensichtlich nicht gehört, da es nicht zur Erwärmung des Wassers beiträgt, arbeitet also wie ein Durchlauferhitzer, d.h. das Wasser fließt in die Heizanlage, durchfließt sie und wird erwärmt und fließt dann aus ihr heraus. Daraus ergibt sich, dass das Wasser nach jedem einzelnen Durchfluss der Bestandteile der Heizanlage zu dem Abnehmer zugeführt wird, sodass es schwierig ist zu gewährleisten, dass das auslaufende Wasser immer die gewünschte Temperatur aufweist.

Auch das Dokument FR 2928369 A1 offenbart eine Heizanlage, die es ermöglicht das Wasser, unter Anwendung der Grundsätze des Jean Pain Verfahrens, zu erwärmen. Um die Aufenthaltszeit des Wassers in dem Kompostierungshaufen zu verlängern und dadurch die Temperatur zu erhöhen auf die das Wasser erwärmt wird, umfasst diese bekannte Heizanlage zusätzlich, gegenüber der eingangs erläuterten traditionellen Lösung bei der nur Rohre vorgesehen sind, einen Behälter. Dieser Behälter ermöglicht es die Menge des in der Heizanlage enthaltenen Wassers im Vergleich zu der o.g. traditionellen Lösung zu erhöhen. Das erwärmte und den Behälter füllende Wasser trägt dazu bei, die Temperatur des Wassers zu stabilisieren, d.h. es gewährleistet dass die Temperatur des aus der Heizanlage auslaufenden Wassers sich nicht in unvorhersehbarer Weise ändert und unter einem Mindestwert sinkt.

Bei beiden bekannten erläuterten Heizanlagen ist der Kompostierungshaufen innerhalb eines Behälters angeordnet und das macht, im Fall von große Abmessungen aufweisenden Kompostierungshaufen oder von unvorhersehbare oder mit der Zeit veränderbare Abmessungen aufweisenden Kompostierungshaufen, ihre Benutzung problematisch. Darüber hinaus, solange das Wasser nicht an den Abnehmer zugeführt wird, fließt es nicht und steht und dies verhindert eine wirkungsvolle Ausnutzung der vom Kompostierungshaufen erzeugten Wärme.

Das Dokument US 5 144 940 A offenbart eine Heizanlage zum Erwärmen einer Flüssigkeit unter Anwendung der Wärme, die von dem sich zersetzenden Material eines Kompostierungshaufens naturgemäß erzeugt wird.

Das Dokument DE 10 2011 111430 A1 offenbart eine Heizanlage gemäß dem Oberbegriff des Anspruchs 1.

Auch das Dokument DE 31 51 862 A1 offenbart eine Heizanlage gemäß dem Oberbegriff des Anspruches 1. Diese Heizanlage kann als nächstliegender Stand der Technik angesehen werden und sie umfasst eine Vielzahl von Hohlkörpern, einen Haltekörper und einen Behälter.

Die Hohlkörper werden mehrmals von der Flüssigkeit durchflossen, die erwärmt werden soll, und sie sind innerhalb des Kompostierungshaufens angeordnet uns stehen direkt mit dem sich zersetzenden Material davon in Berührung. Die Hohlkörper werden mittels des Haltekörpers gehalten, der seinerseits auch innerhalb des Kompostierungshaufens angeordnet ist und direkt mit dem sich zersetzenden Material davon in Berührung steht. Der Behälter weist nur Öffnungen für den Einlass der Flüssigkeit in ihn und Öffnungen für den Auslass der Flüssigkeit aus ihm,

### Darstellung der Erfindung

Das höchste Temperaturniveau auf das eine Flüssigkeit erwärmt werden kann; hängt von zwei Aspekten ab: von der innerhalb des Kompostierungshaufens herrschenden Temperatur und von der Zeitdauer während weicher die Flüssigkeit der von dem Kompostierungshaufen erzeugten Wärme ausgesetzt ist.

Darüber hinaus muss man, bezüglich der innerhalb des Kompostierungshaufens herrschenden Temperatur, berücksichtigen, dass sie nicht gleichmäßig ist und in den verschieden Bereichen des Kompostierungshaufens verschieden sein kann, insbesondere im Fall von große Abmessungen aufweisenden Kompostierungshaufen oder von unvorhersehbare oder mit der Zeit veränderbare Abmessungen aufweisenden Kompostierungshaufen, die normalerweise nicht in eigens dazu vorgesehenen Behältern enthalten sind, sondern direkt auf dem Boden gebildet werden. Auf die innerhalb des Kompostierungshaufens herrschende Temperatur wirkt auch die Tatsache ein, dass, wenn aus der Heizanlage zu viel erwärmte Flüssigkeit, d.h. zu viel Wärme, abgeführt wird, der Kompostierungshaufen zu viel gekühlt werden kann, sodass die Voraussetzungen, die den Ablauf des organischen Zersetzungsprozesses erlauben, also die Voraussetzungen die die Erzeugung der Wärme erlauben, fehlen könnten. Diese Gefahrsituation muss vermieden werden.

In diesem Zusammenhang besteht die Aufgabe der vorliegenden Erfindung darin eine Heizanlage zur Verfügung zu stellen, die bei der Ausnutzung der in dem Kompostierungshaufen erzeugten Wärme leistungsfähig ist, insbesondere im Fall von große Abmessungen aufweisenden Kompostierungshaufen oder von unvorhersehbare oder mit der Zeit veränderbare Abmessungen aufweisenden Kompostierungshaufen wie jene die im Freien auf dem Boden gebildet werden, und die es erlaubt sowohl die Temperatur, auf die die Flüssigkeit insbesondere eine Flüssigkeit wie das Wasser erwärmt werden kann, als auch die Flüssigkeitsmenge die erwärmt und aus der Heizanlage abgeführt werden kann, zu überwachen und zu regeln.

Erfindungsgemäß wird diese Aufgabe gelöst, wenn eine die in dem Oberbegriff des Patentanspruches 1 angegebenen Merkmale aufweisende Heizanlage zusätzlich auch die in dem kennzeichnenden Teil des Patentanspruches 1 angegebenen Merkmale aufweist.

Der zumindest eine Heizkreislauf, den die Hohlkörper zusammen mit dem Behälter und den sie miteinander anschließenden Rohrleitungen bilden, ist ein Heizkreislauf in dem die Flüssigkeit ständig umläuft, auch wenn man einem Abnehmer keine erwärmte Flüssigkeit abgibt, weil die Öffnungs- und Schließventile geschlossen wurden. Dieser Umstand unterscheidet in bedeutender Weise die erfindungsgemäße Heizanlage von den bekannten Heizanlagen, bei denen stattdessen solange man dem Abnehmer keine erwärmte Flüssigkeit abgibt die Flüssigkeit stehend ist.

Das o.g. zumindest eine Heizkreislauf ermöglicht einen ständigen Umlauf der Flüssigkeit, der vollkommen im Inneren der Heizanlage erfolgt, die also in einer anderen Weise arbeitet als jene eines Durchlauferhitzer, und das ständige Fließen der Flüssigkeit in den zumindest einen Heizkreislauf gewährleistet, dass eine ständige fortlaufende Erwärmung der Flüssigkeit bis zur gewünschten Temperatur stattfindet und zwar indem man in leistungsfähiger Weise die tatsächliche Verteilung der sich in dem Kompostierungshaufen befindlichen Wärme benutzt, da der Haltekörper es ermöglicht die Vielzahl von Hohlkörpern in verteilter Weise anzuordnen, wobei die Anzahl und die Abmessungen der Hohlkörper veränderlich sind und von der Flüssigkeitsmenge abhängen die erwärmt werden soll. Der Behälter ermöglich es außerdem, eine große Menge warmer Flüssigkeit innerhalb der Heizanlage solange beizubehalten bis sie tatsächlich außerhalb der Heizanlage gewünscht wird und das vereinfacht sowohl die Erwärmung der Flüssigkeit als auch die Beibehaltung in der Zeit der Temperatur die die Flüssigkeit aufweist und reduziert die Gefahr dass zu viel Wärme aus dem Kompostierungshaufen abgeführt wird.

Gemäß Anspruch 2 umfasst der Haltekörper einen zylindrischen hohlen Teil, mittels welches die Hohlkörper gehalten werden. Dieser zylindrische hohle Teil des Haltekörpers dient außerdem auch als Behälter für die einen hohen Anteil an organischen Stoffen enthaltenden Flüssigkeiten, derer Vorhandensein bekanntlich wichtig ist, um den biologischen Zersetzungsprozess zu beherrschen, der der Erzeugung der Wärme innerhalb des Kompostierungshaufens zugrunde liegt.

Allgemein kann der Behälter überall angeordnet werden. Falls es genügend Platz gibt, kann er z.B. neben dem Kompostierungshaufen angeordnet werden, damit die Zulaufleitung und die Auslaufleitung möglichst kurz sind. Der Behälter könnte aber auch weit weg vom Kompostierungshaufen angeordnet werden, denn als Behälter der Heizanlage könnte auch ein bereits existierender und sich bei dem Abnehmer befindlicher Behälter dienen, zu dem die erwärmte Flüssigkeit zugeführt wird. In diesem Fall wären aber die Zulaufleitung und die Auslaufleitung sehr lange und man müsste gewährleisten, dass sie sehr gut isoliert sind um den Wärmeverlust zu reduzieren. Man bevorzugt aber, gemäß Anspruch 3, dass der Behälter innerhalb des Kompostierungshaufens angeordnet ist, direkt mit dem sich zersetzenden Material davon in Berührung steht und oberhalb des Haltekörpers angeordnet ist. Durch diese Anordnung werden einige wichtige Vorteile erreicht. Der erste Vorteil, der wichtigste, besteht darin dass auch der Behälter zur Erwärmung der Flüssigkeit beiträgt. Dies geschieht aus zwei verschiedenen Gründen. Der erste Grund besteht darin, dass auch er erwärmt wird und daher wie die Hohlkörper wirkt, weil auch er direkt mit dem Material in Berührung steht. Der zweite Grund besteht darin, dass der Behälter, dank seiner Position oberhalb des Haltekörpers, als Sperre gegen die nach oben steigende Wärme dient, die daher anstatt sich in der Umgebung zu zerstreuen vom Behälter abgefangen wird, sodass der Behälter sich erwärmt und der Bereich des Kompostierungshaufens, in dem die darunterliegenden Hohlkörper angeordnet sind, möglichst warm gehalten wird. Ein weiterer Vorteil den man dank der Anordnung des Behälters innerhalb des Kompostierungshaufens erreicht, besteht darin dass die Gefahr reduziert wird, dass eine plötzliche und unkontrollierte Abkühlung des Materials des Kompostierungshaufens stattfindet.

Die Ansprüche von 4 bis 8 betreffen eine erste Ausführungsform der erfindungsgemäßen Heizanlage, gemäß welcher, man siehe Anspruch 4, die Hohlkörper mittels der Rohrleitungen hintereinander an den Behälter angeschlossen sind. Somit ergibt sich ein einziger großer Heizkreislauf. Es stimmt, dass der Umlauf der Flüssigkeit in der Heizanlage naturgemäß von dem Temperaturunterschied gewährleistet ist, den es zwischen der kälteren Flüssigkeit, die sich auf dem Boden des Behälters versammelt, und der wärmeren Flüssigkeit, die sich in der Nähe des Gipfels des Behälters versammelt, gibt, dennoch ist es vorteilhaft über eine kontrollierte Zirkulation der Flüssigkeit die erwärmt werden soll zu verfügen, sodass, man siehe Anspruch 5, in der Anfangsrohrleitung eine Pumpe vorgesehen ist.

Für diese erste Ausführungsform sind zwei Ausführungsbeispiele der Hohlkörper vorgesehen. Der in Anspruch 6 beanspruchte Hohlkörper unterscheidet sich für seine Kompaktheit und seine mechanische Widerstandsfähigkeit. Die gesamte Oberfläche des Blätterpaares steht mit dem warmen Material des Kompostierungshaufens in Berührung und das ermöglicht es sehr gute Ergebnisse in der Erwärmung der in dem Schlangenrohr fließenden Flüssigkeit zu erreichen. Es ist auch denkbar, abhängig von spezifischen Planungsvariablen, einen Hohlköper, wie denjenigen der in Anspruch 7 beansprucht wird, zu benutzen, der wirklich sehr gute Erwärmungsergebnisse gewährleistet, da die Rohrabschnitte, die das Labyrinth bilden in dem die Flüssigkeit fließt, direkt mit dem warmen Material des Kompostierungshaufens in Berührung stehen.

Schließlich, um die Heizanlage zu entleeren, z.B. um sie mit weniger Mühe anzuheben, ist gemäß Anspruch 8, eine Abflussleitung vorgesehen.

Die Ansprüche von 9 bis 11 betreffen stattdessen eine zweite Ausführungsform der erfindungsgemäßen Heizanlage, gemäß welcher, man siehe Anspruch 9, die Hohlkörper nebeneinander an den Behälter angeschlossen sind. Somit ergeben sich so viele Heizkreisläufe wie es die Hohlkörper sind.

Für diese zweite Ausführungsform der Heizanlage ist die Benutzung des in Anspruch 10 beanspruchten Hohlkörpers vorgesehen, der den Vorteil aufweist, dass er ein kleineres Leergewicht aufweist als dasjenige der zuvor genannten Hohlkörper und dass er einfacher und günstiger als die anderen herstellbar ist. Die vorgesehenen Lamellen verbessern die Wärmeaufnahme seitens des Hohlkörpers.

Auch für diese zweite Ausführungsform ist, man siehe Anspruch 11, eine Abflussleitung vorgesehen, um die Heizanlage zu entleeren.

Die weiteren Ansprüche 12-14 betreffen stattdessen beide Ausführungsformen.

Gemäß Anspruch 12 ist die Form des Behälters bevorzugt diejenige, die sich ergibt wenn man einen Kegel auf einen Zylinder stellt.

Der zylinderförmige Teil des Behälters ist derjenige der als Sperre gegen die nach oben steigende Wärme dient, während der kegelförmige Teil des Behälters die Förderung der Flüssigkeit in Richtung zu dem Gipfel des Behälters erleichtert und das erleichtert die Abführung der erwärmten Flüssigkeit.

Der Kompostierungshaufen erzeugt am Ende des organischen Zersetzungsprozesses keine Wärme mehr und die Heizanlage kann aus dem Kompostierungshaufen herausgenommen werden, um woanders benutzt zu werden. Es ist vorteilhaft, dass dies in einfacher und schneller Weise erfolgen kann. Wenn die Merkmale des Anspruches 13 vorhanden sind, ist es möglich die Heizanlage aus dem Kompostierungshaufen herauszunehmen, indem sie einfacherweise mittels einer äußeren Hebevorrichtung angehoben wird.

Schließlich, ein Kompostierungshaufen besteht bekanntlich aus verschiedenem Pflanzenmaterial, das im Freien angeordnet ist und dadurch den Witterungseinflüssen ausgesetzt ist. Es ist vorteilhaft den Kompostierungshaufen möglichst vor der Windaktion, insbesondere vor seiner Kühlungsaktion, zu schützen. Es ist außerdem vorteilhaft den Kompostierungshaufen kompakt zu halten, weil er mit der Zeit dazu neigt sich selbst zu zerdrücken und breiter zu werden. Es ist daher zweckmäßig, wie man in Anspruch 14 beansprucht, eine Schutz- und Stützbarriere vorzusehen, die rund um den Kompostierungshaufen angeordnet ist. Diesbezüglich können z.B. Stapelplatten benutzt werden, die miteinander zusammengesetzt sind und auf jeweiligen Strohballen angeordnet sind. Die Strohballen üben eine Schutz- und Isolierfunktion aus, aber sie dienen auch dazu die Stapelplatten höher anzuordnen, damit diese dazu reichen die gesamte Höhe des Kompostierungshaufens zu decken. Darüber hinaus können die äußeren Rohrleitungen an die Stapelplatten befestigt werden.

### Kurze Beschreibung der Zeichnungen

In den Figuren zeigen:
die **Fig. 1** schematisch eine Draufsicht einer ersten Ausführungsform der erfindungsgemäßen Heizanlage, wobei zur Vereinfachung der Zeichnung der Kompostierungshaufen nur symbolisch angedeutet ist und nicht alle Modulelemente der Schutz- und Stützbarriere dargestellt sind;
die **Fig. 2** schematisch eine Seitenansicht der Heizanlage der Fig. 1, wobei man aus Klarheitsgründen der Zeichnung auf die Darstellung einiger Rohrleitungen und zwei Hohlkörper verzichtet hat;
die **Fig. 3** schematisch die Schnittdarstellung längs der Schnittlinie S1-S1 der Fig. 2, wobei man die Rohrleitungen hinzugefügt hat, die in Fig. 2 nicht gezeichnet sind;
die **Fig. 4** schematisch eine Seitenansicht der Heizanlage der Fig. 3 wenn man die Seite anschaut, wo sich die Öffnungs- und Schließventile befinden, die an die Zulaufleitung und an die Auslaufleitung angeschlossen sind;
die **Fig. 5a,5b,5c,5d,5e** schematisch und mit Bezug auf die erste Ausführungsform der Heizanlage eine Draufsicht, eine Seitenansicht, eine Schnittdarstellung längs der Schnittlinie S2-S2 der Fig. 5a, eine Schnittdarstellung längs der Schnittlinie S3-S3 der Fig. 5c und eine vergrößerte Darstellung von dem was sich in dem punktierten Rechteck der Fig. 5d eines ersten Ausführungsbeispiels der Hohlkörper befindet;
die **Fig. 6a,6b,6c,6d,6e** schematisch und mit Bezug auf die erste Ausführungsform der Heizanlage eine Draufsicht, eine Seitenansicht, eine Schnittdarstellung längs der Schnittlinie S4-S4 der Fig. 6a, eine Schnittdarstellung längs der Schnittlinie S5-S5 der Fig. 6c und eine vergrößerte Darstellung von dem was sich in dem punktierten Rechteck der Fig. 6d eines zweiten Ausführungsbeispiels der Hohlkörper befindet;
die **Fig. 7** schematisch eine der Fig. 2 ähnliche Seitenansicht einer zweiten Ausführungsform der erfindungsgemäßen Heizanlage, wobei man aus Klarheitsgründen der Zeichnung auf die Darstellung einiger Rohrleitungen und zwei Hohlkörper verzichtet hat;
die **Fig. 8** schematisch die Schnittdarstellung längs der Schnittlinie S6-S6 der Fig. 7, wobei man die Rohrleitungen hinzugefügt hat, die in Fig. 7 nicht gezeichnet sind;
die **Fig. 9a,9b,9c,9d,9e** schematisch und mit Bezug auf die zweite Ausführungsform der Heizanlage eine Draufsicht, eine Seitenansicht, eine Schnittdarstellung längs der Schnittlinie S7-S7 der Fig. 9a, eine Schnittdarstellung längs der Schnittlinie S8-S8 der Fig. 9c und eine vergrößerte Darstellung von dem was sich in dem punktierten Rechteck der Fig. 9d eines dritten Ausführungsbeispiels der Hohlkörper befindet.

### Bester Weg zur Ausführung der Erfindung

Weitere Vorteile und Merkmale der Erfindung gehen aus der folgenden Beschreibung eines Ausführungsbeispiels der erfindungsgemäßen Heizanlage hervor, das anhand der beigelegten Zeichnungen rein beispielhaft aber nicht in einschränkender Weise erläutert wird.

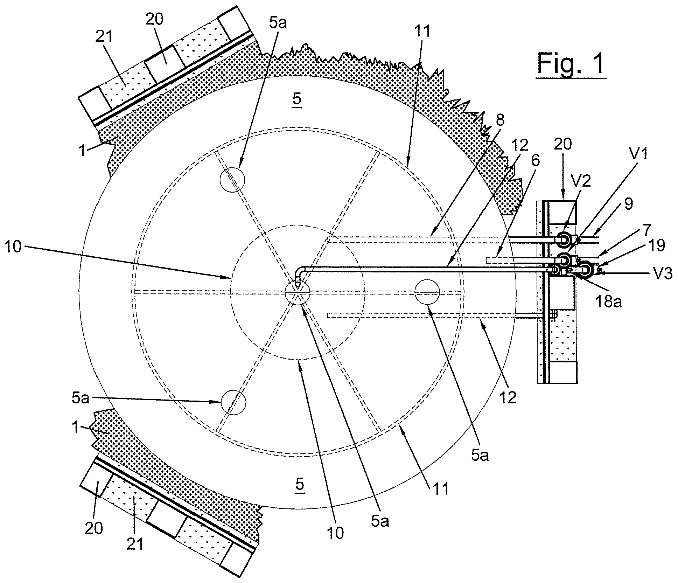

In den Figuren ist eine Heizanlage, zum Erwärmen einer Flüssigkeit unter Anwendung der Wärme die von dem sich zersetzenden Material eines Kompostierungshaufens 1 naturgemäß erzeugt wird, dargestellt. Typischerweise kann eine solche Flüssigkeit z.B. das Wasser für Haushalt- und Zivilzwecke sein und in der Folge wird man auf diese Situation Bezug nehmen. Der Kompostierungshaufen 1 ist nur in der Fig. 1 dargestellt und zwar teilweise und symbolisch mittels Punkte. Es handelt sich um einen Kompostierungshaufen 1, dessen Material im Freien auf dem Boden angeordnet ist. Er 1 ist in den anderen Figuren nicht dargestellt, aber es versteht sich, dass sein Material sich zwischen allen Körpern der Heizanlage befindet.

In den Figuren, insbesondere in der Fig. 1, ist auch eine Schutz- und Stützbarriere dargestellt, die rund um den Kompostierungshaufen 1 längs seinem Umfang angeordnet ist und z.B. aus einer Vielzahl von miteinander zusammengesetzten Modulelementen 20,21 besteht, z.B. Stapelplatten 20 die auf einer jeweiligen Vielzahl von Strohballen 21 angeordnet sind. Um die Zeichnung verständlicher zu machen, sind in der Fig. 1 nur einige der in Wirklichkeit vorhanden Stapelplatten 20 und Strohballen 21 dargestellt.

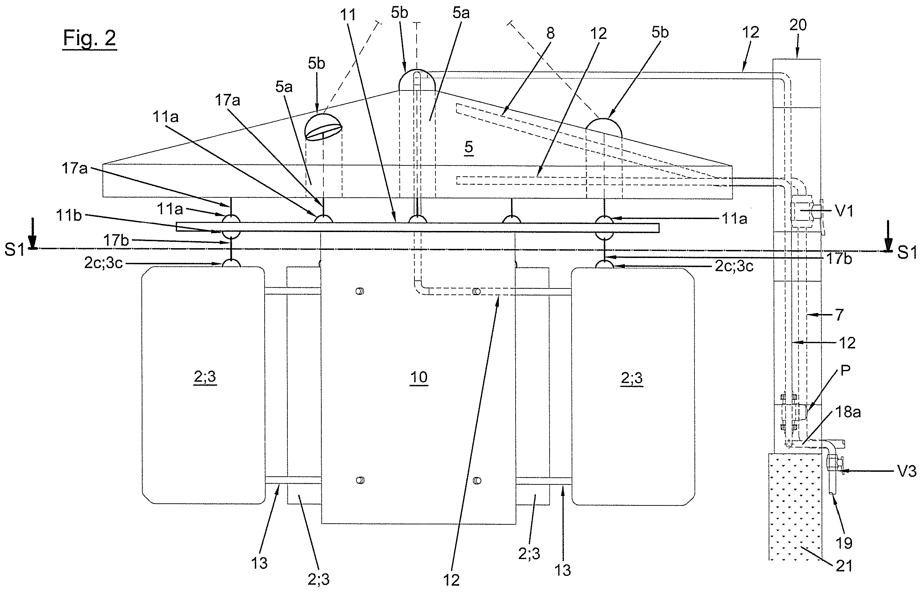

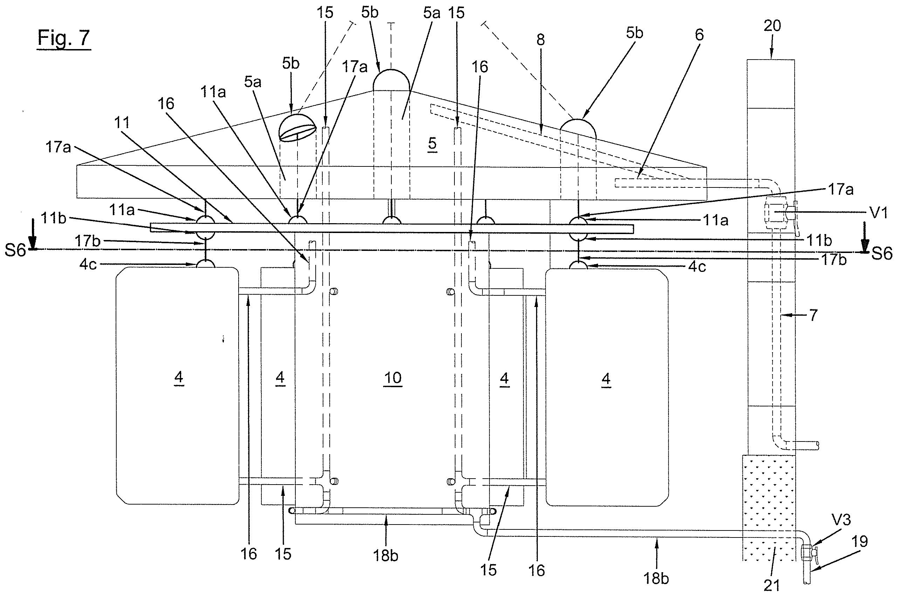

Die Heizanlage umfasst eine Vielzahl von Hohlkörpern 2;3;4 und einen Behälter 5, wie z.B. in den Fig. 2 und 7 dargestellt ist, die sich auf zwei verschiedene Ausführungsformen der Heizanlage beziehen.

Die Hohlkörper 2;3;4 sind innerhalb des Kompostierungshaufens 1 angeordnet, stehen direkt mit dem sich zersetzenden Material davon 1 in Berührung und werden mehrmals von der Flüssigkeit durchflossen, die erwärmt werden soll. In den Figuren sind drei mögliche Ausführungsbeispiele dieser Hohlkörper 2;3;4 dargestellt.

Auch der Behälter 5 ist innerhalb des Kompostierungshaufens 1 angeordnet und steht direkt mit dem sich zersetzenden Material davon 1 in Berührung. Die einzigen Öffnungen des Behälters 5 sind die Öffnungen für den Einlass der Flüssigkeit in ihn 5 und die Öffnungen für den Auslass der Flüssigkeit aus ihn 5 und seine Form ist diejenige, die sich ergibt wenn man einen Kegel auf einen Zylinder stellt.

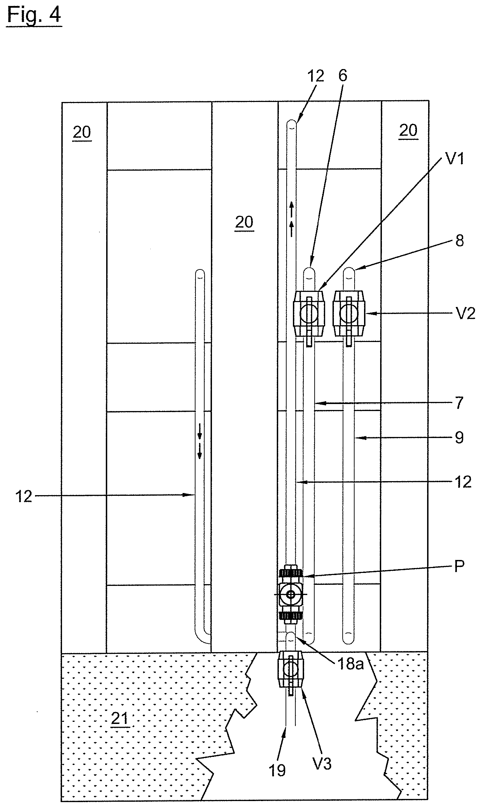

Zu der Heizanlage gehören auch eine Zulaufleitung 6 und eine Auslaufleitung 8, man siehe z.B. die Fig. 1 und 2, die Fig. 4 und die Fig. 7 und 8. Die Zulaufleitung 6 ist an ihrem Ausgangsende an den Behälter 5 angeschlossen und an ihrem Eingangsende an ein erstes Öffnungs- und Schließventil V1 angeschlossen. Letzteres V1 ist auch an eine äußere Zulaufleitung 7 angeschlossen, die 7 aber nicht zur Heizanlage gehört und das aus einer der Heizanlage fremden Quelle kommende Wasser, das erwärmt werden soll, zu der Heizanlage leitet. Das Öffnungs- und Schließventil V1 stellt daher den Anfang der Heizanlage dar.

Die Auslaufleitung 8 ist an ihrem Eingangsende an den Behälter 5 angeschlossen und an ihrem Ausgangsende an ein zweites Öffnungs- und Schließventil V2 angeschlossen. Letzteres V2 ist auch an eine äußere Auslaufleitung 9 angeschlossen, die 9 aber nicht zur Heizanlage gehört und das in der Heizanlage erwärmte Wasser zu einer der Heizanlage fremden Benutzungsstelle leitet. Das Öffnungs- und Schließventil V2 stellt daher das Ende der Heizanlage dar.

Wie z.B. aus den Fig. 2 und 7 hervorgeht, umfasst die Heizanlage auch einen Haltekörper und Rohrleitungen 12,13,14;15,16.

Auch der Haltekörper ist innerhalb des Kompostierungshaufens 1 angeordnet und steht direkt mit dem sich zersetzenden Material davon 1 in Berührung. Er ist insbesondere unterhalb des Behälters 5 angeordnet. Wie z.B. in den Fig. 2 und 7 dargestellt ist, besteht der Haltekörper aus einem zylindrischen hohlen Teil 10 und einem die Form eines Wagenrades aufweisenden Teil 11, der 11 auf dem zylindrischen hohlen Teil 10 angeordnet ist und an ihn 10 befestigt ist. Die Hohlkörper 2;3;4 sind mittels des zylindrischen hohlen Teiles 10 gehalten, wie man in der Folge näher erläutern wird. Die Hohlkörper 2;3;4 sind mittels der Rohrleitungen 12,13,14;15,16 an den Behälter 5 angeschlossen und sie 2;3;4 bilden zusammen mit dem Behälter 5 und den Rohrleitungen 12,13,14;15,16 zumindest einen Heizkreislauf, innerhalb welches der Umlauf des Wassers während seiner Erwärmung erfolgt.

Gemäß einer ersten Ausführungsform der Heizanlage, auf die sich die Fig. 1-6e beziehen und zu der die Rohrleitungen 12,13,14 und ein erstes und ein zweites Ausführungsbeispiel der Hohlkörper, die mit dem Bezugszeichen 2 und dem Bezugszeichen 3 gekennzeichnet sind, gehören, sind die Hohlkörper 2;3 mittels der Rohrleitungen 12,13,14 hintereinander an den Behälter 5 angeschlossen, sodass das aus dem Behälter 5 auslaufende Wasser sie 2;3 alle einer nach dem anderen in der Reihenfolge durchfließt bevor es in den Behälter 5 zurückfließt. Bezugnehmend auf die Rohrleitungen 12,13,14 handelt es sich um eine Anfangsrohrleitung 12, eine Vielzahl von Zwischenrohrleitungen 13 und eine Endrohrleitung 14. Die Anfangsrohrleitung 12 ist an ihrem Eingangsende an den Behälter 5 angeschlossen und an ihrem Ausgangsende an den ersten Hohlkörper 2;3; der Reihenfolge von Hohlkörpern 2;3 angeschlossen. Die allgemeine Zwischenrohrleitung 13 der Vielzahl von Zwischenrohrleitungen 13 ist an ihrem einen Ende an einen allgemeinen Hohlkörper 2;3 und an ihrem anderen Ende an den Hohlkörper 2;3 angeschlossen, der in der Reihenfolge der Hohlkörper 2;3 demjenigen Hohlkörper folgt an den sie 13 bereits angeschlossen ist. Schließlich ist die Endrohrleitung 14 an ihrem Eingangsende an den letzten Hohlkörper 2;3 der Reihenfolge der Hohlkörper 2;3 angeschlossen und an ihrem Ausgangsende an den Behälter 5 angeschlossen. Die Reihenfolge der Hohlkörper 2;3 bildet daher zusammen mit dem Behälter 5, der Anfangsrohrleitung 12, der Vielzahl von Zwischenrohrleitungen 14 und der Endrohrleitung 14 einen einzigen Heizkreislauf. In diesem Heizkreislauf, insbesondere in seiner Anfangsrohrleitung 12, ist eine Pumpe P angeordnet, um das Wasser das erwärmt werden soll in kontrollierter Weise umlaufen zu lassen.

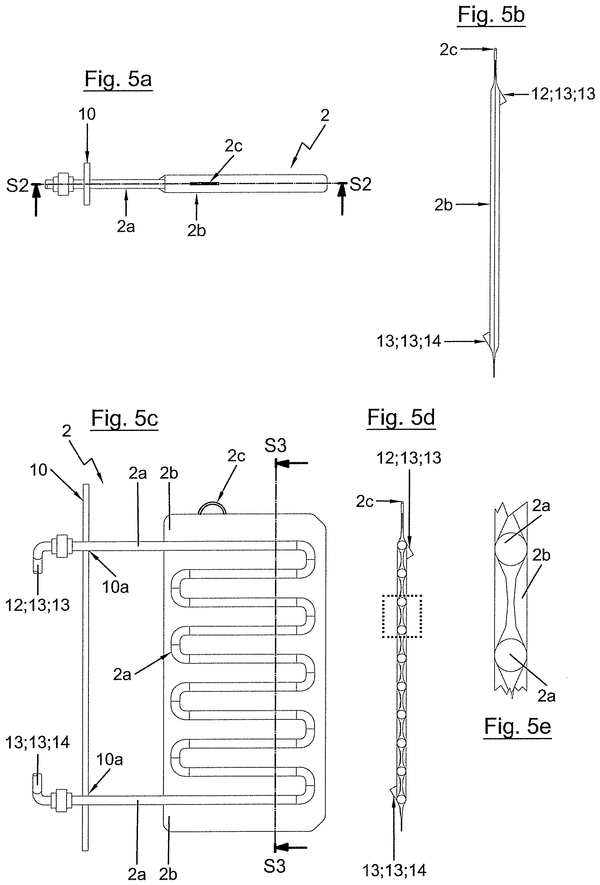

Das erste Ausführungsbeispiel der Hohlkörper, dasjenige das mit dem Bezugszeichen 2 gekennzeichnet ist, ist in den Fig. 5a-5e näher dargestellt. Es 2 besteht aus einem Schlangenrohr 2a und einem Paar Blätter 2b. Die Blätter sind an entgegengesetzten Seiten des Schlangenrohres 2a angeordnet und stehen mit ihm 2a in Berührung, damit sie es zwischen sich einschließen. Sie 2b sind außerdem eines in Richtung zu dem anderen örtlich verformt, bis sie sowohl an den eigenen Rändern als auch an den sich zwischen zwei aufeinanderfolgenden Abschnitten des Schlangenrohres 2a befindlichen Bereichen miteinander in Berührung stehen. Wie auch aus der Fig. 5c hervorgeht, dient das Schlangenrohr 2a auch als Anschlussleitung, sodass der Hohlkörper 2 mittels der Enden des Schlangenrohres 2a an die jeweilige Rohrleitung 12 oder 13 oder 14 angeschlossen werden kann. Abhängig von der Position des allgemeinen Hohlkörpers in der Reihenfolge der Hohlkörper 2 die vom Wasser das erwärmt werden soll durchflossen werden, ist das Schlangenrohr 2a entweder an die Anfangsrohrleitung 12 und an eine Zwischenrohrleitung 13 oder an zwei Zwischenrohrleitungen 13 oder an eine Zwischenrohrleitung 13 und an die Endrohrleitung 14 angeschlossen.

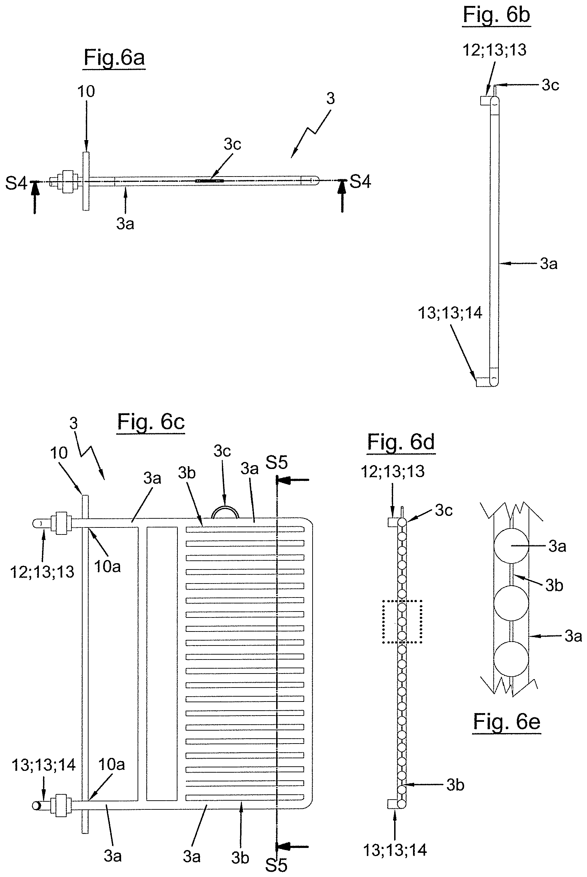

Das zweite Ausführungsbeispiel der Hohlkörper, dasjenige das mit dem Bezugszeichen 3 gekennzeichnet ist, ist in den Fig. 6a-6e näher dargestellt. Es 3 besteht aus einer Vielzahl von Rohrabschnitten 3a und einer Vielzahl von Platten 3b. Die Rohrabschnitte 3a sind derart miteinander verbunden, dass sie 3a sowohl ein Labyrinth, innerhalb welches die Flüssigkeit fließt die erwärmt werden soll, als auch Anschlussleitungen bilden. Jede der Platten 3b ist in einem jeweiligen von den Rohrabschnitten 3a freigelassenen Freiraum angeordnet und starr mit den angrenzenden Rohrabschnitten 3a verbunden ist. Wie man erläutert hat und aus den Figuren hervorgeht, bilden die Rohrabschnitte 3a auch Anschlussleitungen, sodass auch der allgemeine Hohlkörper 3 kann, wie der Hohlkörper 2 und abhängig von seiner Position in der Reihenfolge der Hohlkörper 3 die vom Wasser durchflossen werden das erwärmt werden soll, an die jeweilige Rohrleitung 12 oder 13 oder 14 angeschlossen werden.

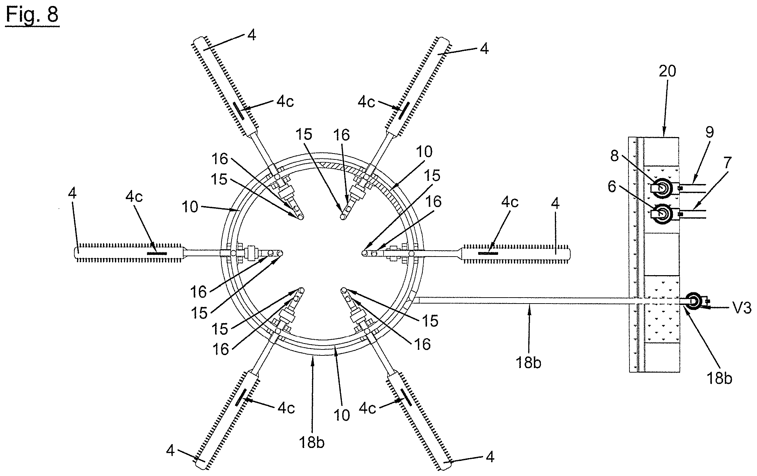

Gemäß einer zweiten Ausführungsform der Heizanlage, auf die sich die Fig. 7,8,9a-9e beziehen und zu der die Rohrleitungen 15,16 und ein drittes Ausführungsbeispiel der Hohlkörper, das mit dem Bezugszeichen 4 gekennzeichnet ist, gehören, sind die Hohlkörper 4 mittels der Rohrleitungen 15,16 nebeneinander an den Behälter 5 angeschlossen. Bezugnehmend auf die Rohrleitungen 15,16, man siehe z.B. die Fig. 7 und 8, handelt es sich um eine Vielzahl von Vorlaufleitungen 15 und eine Vielzahl von Rücklaufleitungen 16. Jede Vorlaufleitung 15 ist an ihrem Eingangsende an den Behälter 5 angeschlossen und an ihrem Ausgangsende an einen jeweiligen Hohlkörper 4 angeschlossen, während jede Rücklaufleitung 16 an ihrem Eingangsende an einen jeweiligen Hohlkörper 4 angeschlossen ist und an ihrem Ausgangsende an den Behälter 5 angeschlossen ist. Jeder Hohlkörper 4 bildet daher zusammen mit dem Behälter 5, der Vorlaufleitung 15 und der Rücklaufleitung 16, die ihm 4 zugeordnet sind, einen eigenen Heizkreislauf. Anders als bei der ersten Ausführungsform der Heizanlage sind keine Pumpen für den Umlauf des Wassers vorgesehen und der Umlauf des Wassers erfolgt innerhalb jedes Heizkreislaufes naturgemäß.

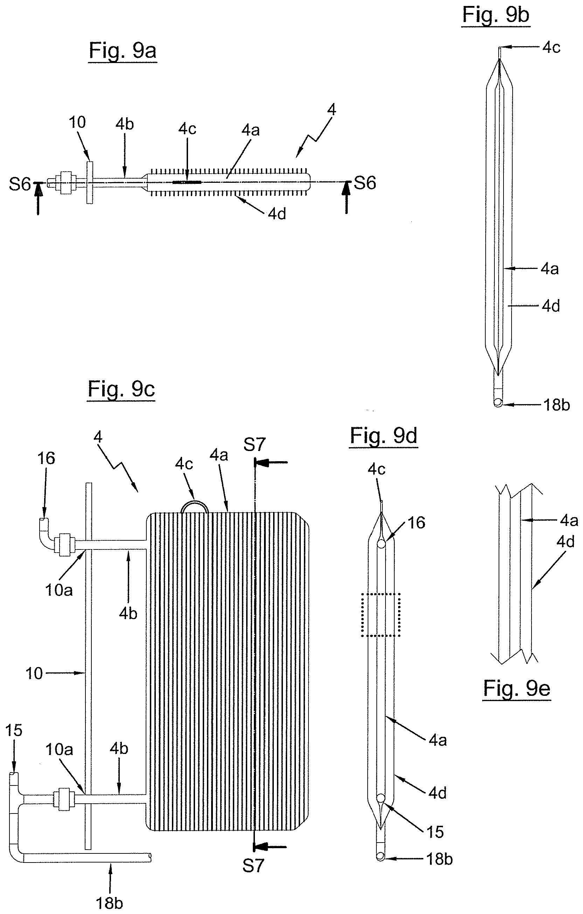

Das dritte Ausführungsbeispiel der Hohlkörper, dasjenige das mit dem Bezugszeichen 4 gekennzeichnet ist, ist in den Fig. 9a-9e näher dargestellt. Es 4 besteht aus einem Hohlteil 4a, der auf seiner äußeren Oberfläche mit einer Vielzahl von Lamellen 4d versehen ist, und aus Anschlussrohren 4b. Von den beiden Anschlussrohren 4b ist eines an die jeweilige Vorlaufleitung 15 angeschlossen und das andere an die jeweilige Rücklaufleitung 16 angeschlossen. Die Vorlaufleitung 15 ist an das Anschlussrohr 4b angeschlossen, das unten angeordnet ist, während die Rücklaufleitung 16 an das Anschlussrohr 4b angeschlossen, das oben angeordnet ist, damit das Wasser, das erwärmt werden soll, umlaufen kann ohne dass man dafür eine Pumpe vorsehen muss.

Die weiteren Merkmale die man in der Folge erläutern wird, gelten für beide Ausführungsformen der Heizanlage.

Wie man erläutert hat, werden die Hohlkörper 2;3;4 mittels des zylindrischen hohlen Teiles 10 gehalten. Sie 2;3;4 werden von dem zylindrischen hohlen Teil gehalten, dadurch dass das Schlangenrohr 2a des Hohlkörpers 2 oder die als Anschlussleitungen dienende Rohrabschnitte 3a des Hohlkörpers 3 oder die Anschlussrohre 4b des Hohlkörpers 4 sich durch Lageröffnungen 10a erstrecken, die in der Wand des zylindrischen hohlen Teiles 10 vorgesehen sind, wie aus den Fig. 5c,6c,9c hervorgeht.

Der Behälter 5 weist eine Vielzahl von Kanälen 5a auf, die sich durch den Behälter 5 hindurch erstrecken und an entgegengesetzten Seiten aus ihm 5 münden. An diesen Kanälen 5a weist der Behälter 5 Verbindungskörper 5b auf, an die die biegsamen Hebemittel, z.B. Ketten oder Stahlseile, einer äußeren Hebevorrichtung verbindbar sind. In den Figuren ist eine solche äußere Hebevorrichtung nicht dargestellt. In den Fig. 2 und 7 sind nur mittels gestrichelter und unterbrochener Linien mögliche Richtungen angedeutet, längs welcher sich besagte biegsame Hebemittel während das Anheben der Heizanlage erstrecken können.

Zu der Heizanlage gehören auch erste 17a und zweite Stahlseile 17b. Diese erste 17a und zweite Stahlseile 17b treten in Kraft sobald die Heizanlage angehoben wird, um sie aus dem Kompostierungshaufen 1 herauszunehmen.

Jedes der ersten Stahlseile 17a ist an einem Ende mit dem Behälter 5 und an dem anderen Ende mit dem wagenradförmigen Teil 11 verbunden. Letzterer 11 ist zu diesem Zweck auf seiner zum Behälter 5 hin gerichteten Oberfläche mit ersten Ringen 11a versehen. Jedes erste Stahlseil 17a erstreckt sich in einem jeweiligen Kanal 5a und ist an einem seiner Enden an einen jeweiligen Verbindungskörper 5b des Behälters 5 verbunden und an seinem anderen Ende an einen jeweiligen ersten Ring 11a des wagenradförmigen Teiles 11.

Jedes der zweiten Stahlseile 17b ist stattdessen an einem Ende mit dem die Form eines Wagenrades aufweisenden Teil 11 und an dem anderen Ende mit einem jeweiligen Hohlkörper 2;3;4 verbunden. Der wagenradförmige Teil 11 ist zu diesem Zweck auf seiner zu den Hohlkörpern 2;3;4 hin gerichteten Oberfläche mit zweiten Ringen 11b versehen, während jeder Hohlkörper 2;3;4 mit zumindest einem dritten Ring 2c;3c;4c versehen ist. Jedes zweite Stahlseil 17b ist an einem seiner Enden an einen jeweiligen zweiten Ring 11b des wagenradförmigen Teiles 11 und an seinem anderen Ende an den dritten Ring 2c;3c;4c des jeweiligen Hohlkörpers 2;3;4 verbunden.

Die Arbeitsweise der Heizanlage ist wie folgt.

Man stellt die Heizanlage in den Kompostierungshaufen 1 und achtet darauf, dass das den Kompostierungshaufen 1 bildende Material ihn vollständig deckt und auch zwischen den Körpern der Heizanlage angeordnet ist und direkt mit diesen in Berührung steht. Durch das Öffnen des ersten Öffnungs- und Schließventils V1 wird in die Heizanlage das Wasser zugeleitet das erwärmt werden soll. Ob es sich um die erste Füllung oder ob es sich um eine Nachfüllung handelt, wird dann, sobald die Heizanlage gefüllt worden ist, das erste Öffnungs- und Schließventil V1 geschlossen. Die Zulaufleitung 6 mündet in den Behälter 5, in der Nähe des Bodens des Behälters 5, sodass dieses zugeleitete kalte Wasser sich nicht mit dem wärmeren schon vorhandenen Wasser mischt, das sich stattdessen im Bereich des Gipfels des Behälters 5 versammelt.

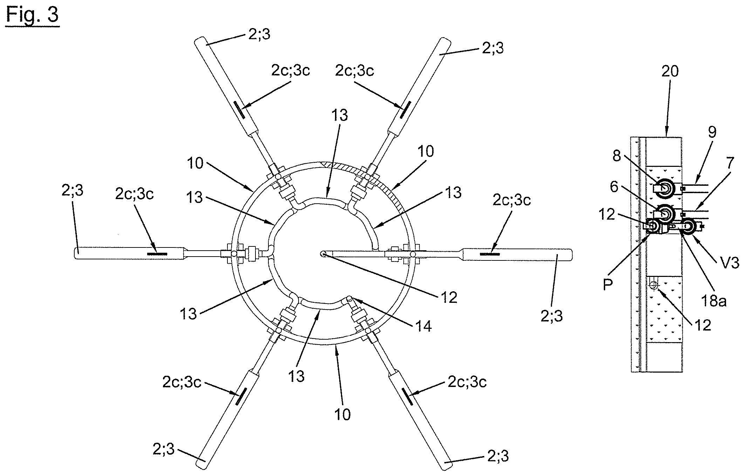

Im Fall der ersten Ausführungsform, man siehe z.B. die Fig. 2 und 3, gelangt das aus dem Behälter 5 auslaufende Wasser mittels der Anfangsrohrleitung 12 und der Zwischenrohrleitungen 13 in die Hohlkörper 2;3. Im Fall der zweiten Ausführungsform, man siehe z.B. die Fig. 7 und 8, gelangt das aus dem Behälter 5 auslaufende Wasser mittels der verschiedenen Vorlaufleitungen 15 in die Hohlkörper 4. Außerhalb der Hohlkörper 2;3;4 ist die vom organischen Zersetzungsprozess des den Kompostierungshaufen 1 bildenden Materials erzeugte Wärme vorhanden, sodass die Hohlkörper 2;3;4 warm sind und das in ihnen 2;3;4 fließende Wasser erwärmt wird. Das erwärmte Wasser das mittels der Endrohrleitung 14, im Fall der ersten Ausführungsform, bzw. mittels der verschiedenen Rücklaufleitungen 16, im Fall der zweiten Ausführungsform, zu dem Behälter 5 zurückfließt, mischt sich mit dem im Behälter 5 bereits vorhandenen Wasser, was eine Erhöhung des Mittelwertes der Temperatur des im Behälter 5 enthaltenen Wassers mit sich bringt. Die o.g. Erwärmungszyklen wiederholen sich ständig, sodass sowohl das im Behälter 5 enthaltene Wasser als auch das Wasser, das aus dem Behälter 5 ausläuft um einem neuen Erwärmungszyklus ausgesetzt zu werden, fortlaufend immer mehr erwärmt werden. Die obere Grenze für die Erwärmung bildet die in dem Innere des Kompostierungshaufens 1 vorhandene Temperatur.

Im Fall der ersten Ausführungsform der Heizanlage erfolgt der Umlauf des Wassers in dem Heizkreislauf in kontrollierter Weise, weil die Pumpe P vorhanden ist, während im Fall der zweiten Ausführungsform der Heizanlage erfolgt der Umlauf des Wasser in den verschiedenen Heizkreisläufe in natürlicher Weise.

Beim Abführen von erwärmten Wasser aus der Heizanlage wird das zweite Öffnungs- und Schließventil V2 geöffnet, damit das Wasser in die äußere Auslaufleitung 9 abfließen kann. Danach muss man die Heizanlage wieder füllen indem man das Öffnungs- und Schließventil V1 öffnet.

Schließlich, kann man durch das Öffnen des Öffnungs- und Schließventils V3 die Heizanlage entleeren, z.B. um sie anzuheben und aus dem Kompostierungshaufen 1 herauszunehmen. In diesem Fall werden die Stahlseile eines Kranes an die Verbindungskörper 5b des Behälters 5 verbunden. Beim Anheben des Behälters 5 werden zuerst die ersten Stahlseile 17a gestrafft, sodass zusammen mit dem Behälter 5 auch der Haltekörper 10,11 gehoben wird. Beim weiteren Anheben, werden dann auch die zweiten Stahlseile 17b gestrafft, sodass auch die Hohlkörper 2;3;4 angehoben werden.

## Patentansprüche

1. Heizanlage zum Erwärmen einer Flüssigkeit, insbesondere einer Flüssigkeit wie das Wasser, unter Anwendung der Wärme, die von dem sich zersetzenden Material eines Kompostierungshaufens (1) naturgemäß erzeugt wird, umfassend:
eine Vielzahl von Hohlkörpern (2;3;4), die innerhalb des Kompostierungshaufens (1) angeordnet sind, direkt mit dem sich zersetzenden Material davon (1) in Berührung stehen und mehrmals von der Flüssigkeit durchflossen werden, die erwärmt werden soll;
einen Haltekörper, der innerhalb des Kompostierungshaufens (1) angeordnet ist und direkt mit dem sich zersetzenden Material davon (1) in Berührung steht, wobei die Hohlkörper (2;3;4) mittels des besagten Haltekörpers gehalten werden, und
. einen Behälter (5), dessen einzigen Öffnungen die Öffnungen für den Einlass der Flüssigkeit in ihn (5) und die Öffnungen für den Auslass der Flüssigkeit aus ihn (5) sind, **dadurch gekennzeichnet, dass** sie zusätzlich umfasst:
. eine Zulaufleitung (6), derer ein Ende an den Behälter (5) angeschlossen ist und derer anderes Ende an ein erstes Öffnungs- und Schließventil (V1) angeschlossen ist, an dem (V1) die aus einer der Heizanlage fremden Quelle kommende Flüssigkeit zugeleitet wird, die erwärmt werden soll;
. eine Auslaufleitung (8), derer ein Ende an den Behälter (5) angeschlossen ist und derer anderes Ende an ein zweites Öffnungs- und Schließventil (V2) angeschlossen ist, aus dem (V2) die in der Heizanlage erwärmte Flüssigkeit ausläuft;
. Rohrleitungen (12,13,14;15,16), mittels derer die Hohlkörper (2;3;4) an den Behälter (5) angeschlossen sind, wobei die Hohlkörper (2;3;4) zusammen mit dem Behälter (5) und den Rohrleitungen (12,13,14;15,16) zumindest einen Heizkreislauf bilden, innerhalb welches die Flüssigkeit während ihrer Erwärmung umläuft.

2. Heizanlage nach Anspruch 1, **dadurch gekennzeichnet dass** der Haltekörper aus einem zylindrischen hohlen Teil (10) und einem die Form eines Wagenrades aufweisenden Teil (11) besteht, der (11) auf dem zylindrischen hohlen Teil (10) angeordnet ist und an ihn (1) befestigt ist, wobei die Hohlkörper (2;3;4) mittels des besagten zylindrischen hohlen Teiles (10) gehalten sind.

3. Heizanlage nach Anspruch 1 oder 2, **dadurch gekennzeichnet dass** der Behälter (5) innerhalb des Kompostierungshaufens (1) angeordnet ist, direkt mit dem sich zersetzenden Material davon (1) in Berührung steht und oberhalb des Haltekörpers angeordnet ist.

4. Heizanlage nach einem der Ansprüche von 1 bis 3, **dadurch gekennzeichnet dass** die Hohlkörper (2;3) mittels der Rohrleitungen (12,13,14) hintereinander an den Behälter (5) angeschlossen sind, wobei die Reihenfolge der Hohlkörper (2;3) zusammen mit dem Behälter (5) und den Rohrleitungen (12,13,14) einen Heizkreislauf bildet, der für alle Hohlkörper (2;3) gemeinsam ist.

5. Heizanlage nach Anspruch 4, **dadurch gekennzeichnet dass** in dem Heizkreislauf, insbesondere in derer Anfangsrohrleitung (12), eine Pumpe (P) angeordnet ist.

6. Heizanlage nach einem der Ansprüche von 1 bis 5, **dadurch gekennzeichnet dass** jeder Hohlkörper (2) aus einem Schlangenrohr (2a) und einem Paar Blätter (2b) besteht, die an den beiden Seiten des Schlangenrohres (2a) angeordnet sind und mit ihm (2a) in Berührung stehen, damit sie es zwischen sich einschließen, und die örtlich eines in Richtung zu dem anderen verformt sind bis sie sowohl an den eigenen Rändern als auch an jedem sich zwischen zwei aufeinanderfolgenden Abschnitten des Schlangenrohres (2a) befindlichen Bereich miteinander in Berührung stehen.

7. Heizanlage nach einem der Ansprüche von 1 bis 5, **dadurch gekennzeichnet dass** jeder Hohlkörper (3) aus einer Vielzahl von Rohrabschnitten (3a), die derart miteinander verbunden sind, dass sie (3a) sowohl ein Labyrinth, innerhalb welches die Flüssigkeit fließt die erwärmt werden soll, als auch Anschlussleitungen bilden, und einer Vielzahl von Platten (3b) besteht, von denen jede in einem jeweiligen von den Rohrabschnitten (3a) freigelassenen Freiraum angeordnet und starr mit den angrenzenden Rohrabschnitten (3a) verbunden ist.

8. Heizanlage nach einem der vorhergehenden Ansprüche, **dadurch gekennzeichnet dass** sie auch eine Abflussleitung (18a) umfasst, derer ein Ende an die Anfangsrohrleitung (12) angeschlossen ist und derer anderes Ende an ein drittes Öffnungs- und Schließventil (V3) angeschlossen ist, das seinerseits an eine äußere Abflussleitung (19) angeschlossen ist.

9. Heizanlage nach einem der Ansprüche von 1 bis 3, **dadurch gekennzeichnet dass** die Hohlkörper (4) mittels der Rohrleitungen (15,16) nebeneinander an den Behälter (5) angeschlossen sind, wobei jeder Hohlkörper (4) zusammen mit dem Behälter (5) und den ihm (4) zugeordneten Rohrleitungen (15,16) einen eigenen Heizkreislauf bildet.

10. Heizanlage nach Anspruch 9, **dadurch gekennzeichnet dass** jeder Hohlkörper (4) aus einem Hohlteil (4a) und Anschlussrohren (4b) besteht, wobei der Hohlteil (4a) auf seiner äußeren Oberfläche mit einer Vielzahl von Lamellen (4d) versehen ist.

11. Heizanlage nach einem der Ansprüche 9 oder 10, **dadurch gekennzeichnet dass** sie auch eine Abflussleitung (18b) umfasst, an die jede Vorlaufleitung (15) angeschlossen ist und die an ein drittes Öffnungs- und Schließventil (V3) angeschlossen ist, das seinerseits an eine äußere Abflussleitung (19) angeschlossen ist.

12. Heizanlage nach einem der vorhergehenden Ansprüche, **dadurch gekennzeichnet dass** die Form des Behälters (5) diejenige ist, die sich ergibt wenn man einen Kegel auf einen Zylinder stellt.

13. Heizanlage nach einem der Ansprüche von 3 bis 12, **dadurch gekennzeichnet dass** der Behälter (5) eine Vielzahl von Kanälen (5a) aufweist, die sich durch den Behälter (5) hindurch erstrecken und an entgegengesetzten Seiten aus ihm (5) münden, **dass** der Behälter (5) an den Kanälen (5a) Verbindungskörper (5b) aufweist, an die die biegsamen Hebemittel einer äußeren Hebevorrichtung verbindbar sind, und **dass** auch erste Stahlseile (17a), von denen jedes sich in einem jeweiligen Kanal (5a) erstreckt und an einem Ende mit dem Behälter und an dem anderen Ende mit dem die Form eines Wagenrades aufweisenden Teil (11) verbunden ist, und zweite Stahlseile (17b) Teil der Heizanlage sind, von denen jedes an einem Ende mit dem die Form eines Wagenrades aufweisenden Teil (11) und an dem anderen Ende mit einem jeweiligen Hohlkörper (2;3;4) verbunden ist.

14. Heizanlage nach einem der vorhergehenden Ansprüche, **dadurch gekennzeichnet dass** sie auch eine Schutz- und Stützbarriere umfasst, die rund um den Kompostierungshaufen (1) angeordnet ist und aus einer Vielzahl von miteinander zusammengesetzten Modulelementen (20,21) besteht.

## Claims

1. Heating system for heating a liquid, in particular a liquid as water, using the heat generated in a natural way by the decomposing material in a compost heap (1), comprising:
a plurality of hollow bodies (2;3;4), which are arranged inside the compost heap (1) in direct contact with the decomposing material thereof (1) and are crossed several times by the liquid to be heated;
a supporting body, which is arranged inside the compost heap (1) in direct contact with the decomposing material thereof (1), the hollow bodies (2;3;4) being supported by means of said supporting body; and
a tank (5), the only openings of it being the openings for letting water in it (5) and the openings for letting water out of it (5);
**characterised in that** it further comprises:
a feeding pipe (6), which is jointed with one of its ends to the tank (5) and with its other end to a first closing/opening valve (V1), to which (V1) is being fed the liquid to be heated coming from a source that is extraneous to the heating system;
an outlet pipe (8), which is jointed with one of its ends to the tank (5) and with its other end to a second closing/opening valve (V2), from which (V2) comes out the liquid that was heated in the heating system;
pipes (12,13,14;15,16), by means of which the hollow bodies (2;3;4) are jointed to the tank (5), the hollow bodies (2;3;4) forming together with the tank (5) and with the pipes (12,13,14;15,16) at least one heating circuit within which the liquid circulates during its heating.

2. Heating system according to claim 1, **characterised in that** the supporting body consists of a hollow cylindrical part (10) and of a cartwheel-shaped part (11) arranged above the hollow cylindrical part (10) and fastened to it (10), the hollow bodies (2;3;4) being supported by means of said hollow cylindrical part (10).

3. Heating system according to claim 1 or 2, **characterised in that** the tank (5) is arranged inside the compost heap (1) in direct contact with the decomposing material thereof (1) and above the supporting structure.

4. Heating system according to one of claims 1 to 3, **characterised in that** by means of the pipes (12,13,14) the hollow bodies (2;3) are jointed in series to the tank (5), the series of hollow bodies (2;3) forming together with the tank (5) and with the pipes (12,13,14) a heating circuit that is common to all the hollow bodies (2;3).

5. Heating system according to claim 4, **characterised in that** in the heating circuit, in particular in its initial pipe (12), a pump (P) is arranged.

6. Heating system according to one of claims 1 to 5, **characterised in that** each of the hollow bodies (2) consists of a coil-shaped pipe (2a) and of a pair of sheets (2b), which are arranged on the two sides of the coil-shaped pipe (2a) and in contact with it (2a), so that they enclose it between them, and are locally deformed, towards each other until they come into contact with each other, both on their own edges and in each zone between two successive sections of the coil-shaped pipe (2a).

7. Heating system according to one of claims 1 to 5, **characterised in that** each of the hollow bodies (3) consists of a plurality of pipe sections (3a), which are joined to each other in such a way that they (3a) form both a labyrinth within which the water to be heated flows and connection pipes, and of a plurality of plates (3b), each of which is arranged in a respective space left free by the pipe sections (3a) and is rigidly connected to the adjacent pipe sections (3a).

8. Heating system according to one of the previous claims, **characterised in that** it also comprises an exhaust pipe (18a), which is jointed with one of its ends to the initial pipe (12) and with its other end to a third closing/opening valve (V3) which in its turn is jointed to an external exhaust pipe (19).

9. Heating system according to one of claims 1 to 3, **characterised in that** by means of the pipes (15,16) the hollow bodies (4) are jointed in parallel to the tank (5), each hollow body (4) forming together with the tank (5) and with the pipes (15,16) associated with it (4) an own heating circuit.

10. Heating system according to claim 9, **characterised in that** each of the hollow bodies (4) consists of a hollow part (4a) and of connection pipes (4b), the hollow part (4a) being provided on its external surface with a plurality of blades (4d).

11. Heating system according to claim 9 or 10, **characterised in that** it also comprises an exhaust pipe (18b), to which each delivery pipe (15) is jointed and which is jointed to a third closing/opening valve (V3) which in its turn is jointed to an external exhaust pipe (19).

12. Heating system according to one of the previous claims, **characterised in that** the shape of the tank (5) is the one resulting from the arrangement of a cone above a cylinder.

13. Heating system according to one of claims 3 to 12, **characterised in that** the tank (5) has a plurality of channels (5a), which extend through the tank (5) and come out of it (5) on opposite sides, **in that** the tank (5) has next to the channels (5a) some attachment bodies (5b), to which the flexible lifting means of an external lifting device are connectable, and **in that** the heating system also comprises first steel cables (17a), each of which extends into a respective channel (5a) and is connected with one end to the tank (5) and with the other end to the cartwheel-shaped part (11), and second steel cables (17b), each of which is connected with one end to the cartwheel-shaped part (11) and with the other end to a respective hollow body (2;3;4).

14. Heating system according to one of the previous claims, **characterised in that** it also comprises a protection and support barrier, which is arranged around the compost heap (1) and is made up of a plurality of modular elements (20,21), which are joined to each other.

## Revendications

1. Installation de chauffage pour chauffer un liquide, en particulier un liquide comme l'eau, utilisant la chaleur générée de manière naturelle par le matériau en décomposition d'un tas de compostage (1), comprenant:
une pluralité de corps creux (2;3;4), qui sont disposés à l'intérieur du tas de compostage (1) directement en contact avec le matériau en décomposition de celui-ci (1) et sont traversés plusieurs fois par le liquide à chauffer;
un corps de support, qui est disposé à l'intérieur du tas de compostage (1) directement en contact avec le matériau en décomposition de celui-ci (1), les corps creux (2;3;4) étant supportés au moyen dudit corps de support; et
un réservoir (5), dont les seules ouvertures sont les ouvertures pour l'entrée du liquide dans celui-ci (5) et les ouvertures pour la sortie du liquide de celui-ci (5), **caractérisée en ce qu'**elle comprend en outre :
un tuyau d'alimentation (6), qui est raccordé avec l'une de ses extrémités au réservoir (5) et avec l'autre de ses extrémités à une première vanne d'ouverture/fermeture (V1), à laquelle (V1) est alimenté le liquide qui doit être chauffé provenant d'une source étranger a l'installation de chauffage ;
un tuyau de sortie (8), qui est raccordé avec l'une de ses extrémités au réservoir (5) et avec l'autre de ses extrémités à une deuxième vanne d'ouverture/fermeture (V2), à partir de laquelle (V2) s'écoule le liquide qui a été chauffé dans l'installation de chauffage ;
tuyaux (12,13,14;15,16), au moyen desquels les corps creux (2;3;4) sont raccordés au réservoir (5), les corps creux (2;3;4) formant avec le réservoir (5) et les tuyaux (12,13,14;15,16) au moins un circuit de chauffage, à l'intérieur duquel le liquide circule pendant son chauffage.

2. Installation de chauffage selon la revendication 1, **caractérisée en ce que** le corps de support est composé d'une partie cylindrique creuse (10) et d'une partie en forme de roue de wagon (11) disposée au-dessus de la partie cylindrique creuse (10) et fixée à celle-ci (10), les corps creux (2;3;4) étant supportés au moyen de ladite partie cylindrique creuse (10).

3. Installation de chauffage selon la revendication 1 ou 2, **caractérisée en ce que** le réservoir (5) est disposé à l'intérieur du tas de compostage (1) directement en contact avec le matériau en décomposition de celui-ci (1) et au-dessus du corps de support.

4. Installation de chauffage selon l'une des revendications 1 à 3, **caractérisée en ce qu'**au moyen des tuyaux (12,13,14) les corps creux (2;3) sont raccordés en série au réservoir (5), la série de corps creux (2;3) formant avec le réservoir (5) et les tuyaux (12,13,14) un circuit de chauffage qui est commun à tous les corps creux (2;3).

5. Installation de chauffage selon la revendication **4, caractérisée en ce qu'**une pompe (P) est disposée dans le circuit de chauffage, notamment dans le tuyau initial (12) de celui-ci.

6. Installation de chauffage selon l'une des revendications 1 à 5, **caractérisée en ce que** chacun des corps creux (2) est constitué d'un tuyau serpentin (2a) et d'une paire de feuilles (2b), qui sont disposées des deux côtés du tuyau serpentin (2a) et en contact avec celui-ci (2a), de manière à l'enfermer entre elles, et sont déformées localement, l'une vers l'autre jusqu'à ce qu'elles entrent en contact réciproque, sur leurs bords aussi bien que dans chaque zone comprise entre deux portions successives du tuyau serpentin (2a).

7. Installation de chauffage selon l'une des revendications 1 à 5, **caractérisée en ce que** chacun des corps creux (3) est constitué d'une pluralité de portions de tuyaux (3a), qui sont unies de telle sorte entre elles qu'elles (3a) forment un labyrinthe dans lequel s'écoule le liquide à chauffer aussi bien que des tuyaux de raccord, et d'une pluralité de plaques (3b), dont chacune est disposée dans un espace respectif laissé libre par les portions de tuyau (3a) et est rigidement unie aux portions de tuyau (3a) adjacentes.

8. Installation de chauffage selon l'une des revendications précédentes, **caractérisée en ce qu'**elle comprend également un tuyau d'évacuation (18a), qui est raccordé avec l'une de ses extrémités au tuyau initial (12) et avec l'autre de ses extrémités à une troisième vanne de fermeture/ouverture (V3) raccordée à son tour à un tuyau externe d'évacuation (19).

9. Installation de chauffage selon l'une des revendications 1 à 3, **caractérisée en ce que**, au moyen des tuyaux (15,16), les corps creux (4) sont raccordés en parallèle au réservoir (5), chaque corps creux (4) formant avec le réservoir (5) et les tuyaux (15,16) qui sont associés à celui-ci (4) son propre circuit de chauffage.

10. Installation de chauffage selon la revendication 9, **caractérisée en ce que** chacun des corps creux (4) est constitué d'une partie creuse (4a) et de tuyaux de raccord (4b), la partie creuse (4a) étant pourvu sur sa surface externe d'une pluralité de lamelles (4d).

11. Installation de chauffage selon la revendication 9 ou 10, **caractérisée en ce qu'**elle comprend également un tuyau d'évacuation (18b), auquel chaque tuyau de refoulement (15) est raccordé et qui est raccordé à une troisième vanne de fermeture/ouverture (V3) raccordée à son tour à un tuyau externe d'évacuation (19).

12. Installation de chauffage selon l'une des revendications précédentes, **caractérisée en ce que** la forme du réservoir (5) est celle qui résulte de la disposition d'un cône sur un cylindre.

13. Installation de chauffage selon l'une des revendications 3 à 12, **caractérisée en ce que** le réservoir (5) présente une pluralité de canaux (5a), qui s'étendent à travers le réservoir (5) et sortent de celui-ci (5) de côtés opposés, **que** le réservoir (5) présente en correspondance avec les canaux (5a) des corps de fixation (5b), auxquels les moyens flexibles de levage d'un dispositif externe de levage peuvent être connectés, et **que** font également partie de l'installation de chauffage des premiers câbles en acier (17a), dont chacun s'étend dans un canal respectif (5a) et est connecté avec une extrémité au réservoir (5) et avec l'autre extrémité à la partie en forme de roue de wagon (11), et des deuxièmes câbles en acier (17b), chacun desquels est connecté avec une extrémité à la partie en forme de roue de wagon (11) et avec l'autre extrémité à un corps creux respectif (2;3;4).

14. Installation de chauffage selon l'une des revendications précédentes, **caractérisée en ce qu'**elle comprend également une barrière de protection et de support, disposée autour du tas de compostage (1) et composée d'une pluralité d'éléments modulaires (20,21) unis entre eux.
